# EUROPÄISCHE PATENTSCHRIFT

(11) **EP 2 232 975 B1**
(45) Veröffentlichungstag und Bekanntmachung des Hinweises auf die Patenterteilung: **13.11.2013**
(21) Anmeldenummer: 10401031.9
(22) Anmeldetag: 15.03.2010
(51) Int. Cl.: A01C 15/00

(54) **Vorratsbehältereinheit**
Hopper unit
Unité de réservoir de stockage

(30) Priorität: 18.03.2009 DE 102009013772
(43) Veröffentlichungstag der Anmeldung: 29.09.2010
(73) Patentinhaber: Amazonen-Werke H. Dreyer GmbH & Co. KG, 49205 Hasbergen (DE)
(72) Erfinder: Pokriefke, Michael, 27798 Hude (DE); Van Zoest, Ralf, 46767 Twist (DE); Brüggemann, Klaus, 27777 Ganderkesee (DE); Wilken, Martin, 26409 Wittmund (DE); Schröder, Olaf, 27798 Hude (DE)

(56) Entgegenhaltungen:
- EP-A2- 1 086 616
- FR-A5- 2 076 938
- US-A- 5 881 904
- US-A1- 2003 110 999

## Beschreibung

Die Erfindung betrifft eine Vorratsbehältereinheit gemäß des Oberbegriffes des Patentanspruches 1.

Derartige Vorratsbehältereinheiten sind in der Praxis bekannt, wie z.B. aus den US 5 881 704, US 2003/110999 und FR 2 076 938. Mehrere Vorratsbehälter einer landwirtschaftlichen Verteilmaschine, deren Vorratsbehälter unter Druck gesetzt werden, um mit einem Drucksystem das Material vom Vorratsbehälter über eine Dosiereinheit einer Verteileinrichtung zuzuleiten, sind zu einer Einheit zusammengefasst. Jeder Vorratsbehälter weist eine eigene Einfüllöffnung auf, die jeweils durch einen eigenen Deckel zu verschließen ist.

Derartige Ausgestaltungen sind sehr unhandlich, weil jeder Deckel für jede Einfüllöffnung einzeln geöffnet und verschlossen und mit entsprechenden Verriegelungselementen verriegelt werden muss.

Der Erfindung liegt die Aufgabe zugrunde, das Verschließen der Vorratsbehälter der Vorratsbehältereinheit wesentlich zu vereinfachen.

Diese Aufgabe wird erfindungsgemäß durch das kennzeichnende Merkmal des Patentanspruches 1 gelöst. Infolge dieser Maßnahmen ist mehreren Einfüllöffnungen ein gemeinsames Deckelelement zugeordnet, so dass das Öffnen und Schließen wesentlich vereinfacht angestellt ist. Dadurch erreicht, dass den Einfüllöffnungen mit dem Deckelelement zusammenwirkende Dichtelemente zugeordnet sind, ergibt sich auch eine einfache Ausgestaltung des Deckelementes.

In einer bevorzugten Ausführungsform ist vorgesehen, dass die Deckelelemente aller Vorratsbehälter der

Vorratsbehältereinheit zu einem Deckelelement zusammengefasst sind. Infolge dieser Maßnahme sind allen Einfüllöffnungen der Vorratsbehältereinheit ein gemeinsames Deckelelement zugeordnet, so dass mit einem einzigen Deckelelement sämtliche Einfüllöffnungen zu verschließen und nach dem Aufklappen des Deckelelementes sämtliche Einfüllöffnungen zugänglich sind. Hierdurch wird eine wesentliche Vereinfachung erzielt.

Um die einzelnen Einfüllöffnungen sicher gegeneinander abdichten zu können, ist vorgesehen, dass den Einfüllöffnungen mit dem Deckelelement zusammenwirkende Dichtelemente zugeordnet sind.

Eine gute und vorteilhafte Anordnung der Einfüllöffnungen und die Abdichtung der Vorratsbehälter durch das Deckelement lässt sich dadurch erreichen, dass die einzelnen Einfüllöffnungen der Vorratsbehältereinheit unmittelbar nebeneinander angeordnet sind, dass die Einfüllöffnungen der Vorratsbehälter durch Stege, auf deren Oberseite Dichtelemente angeordnet sind, voneinander getrennt sind.

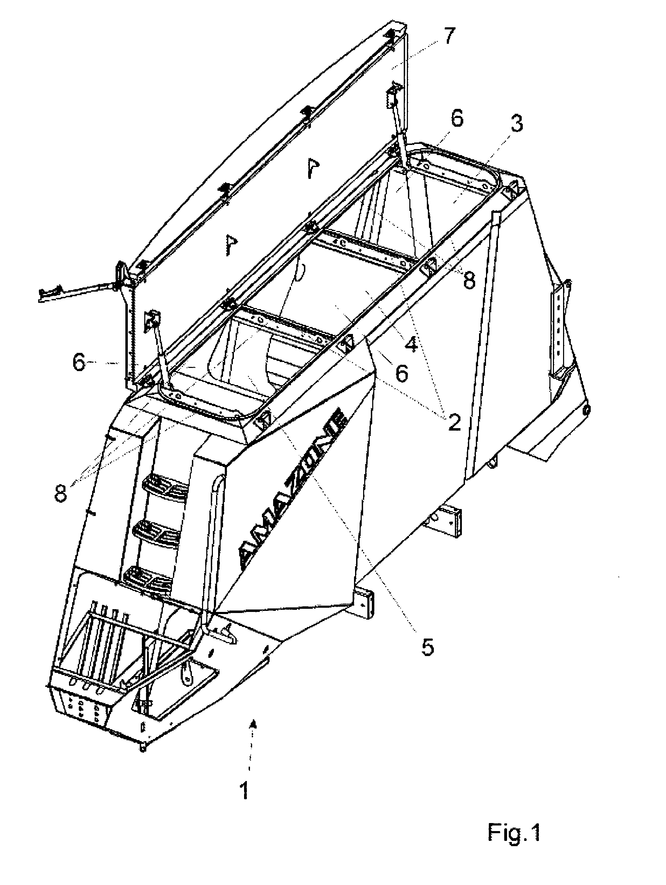

Weitere Einzelheiten der Erfindung sind den übrigen Unteransprüchen und der Zeichnung zu entnehmen. Die Zeichnung zeigt
eine Vorratsbehältereinheit in perspektivischer Darstellung und mit aufgeklapptem Deckelelement.

Die Vorratsbehältereinheit 1 einer pneumatischen Verteilmaschine weist mehrere einzelne durch Zwischenwände 2 voneinander getrennte Vorratsbehälter 3, 4, 5 auf. Den Vorratsbehältern 3, 4, 5 ist ein Druckfördersystem, bei dem die Vorratsbehälter 3, 4 ,5 mit einem Luftdruck höher als der Atmosphärendruck beaufschlagt werden, zugeordnet. Von den Vorratsbehältern, 3, 4, 5 aus lassen sich die in den einzelnen Vorratsbehältern 3,4,5 befindlichen Materialien über ein Dosiersystem in ein pneumatisches Fördersystem, welches zu Ausbringelementen führt, einspeisen.

Die Vorratsbehältereinheit 1 einer landwirtschaftlichen Verteilmaschine, beispielsweise einer Sämaschine zum Ausbringen von Saatgut und Dünger, weist die vorerwähnten einzelnen Vorratsbehälter 3, 4, 5 auf. Die einzelnen Vorratsbehälter 3, 4, 5 weisen die Einfüllöffnungen 6 auf. Der Vorratsbehältereinheit 1 ist ein Deckelelement 7 zugeordnet, mit welchem sämtliche Einfüllöffnungen 6 der Vorratsbehälter 3, 4, 5 der Vorratsbehältereinheit 1 abzudecken, abzuschließen und abzudichten sind. Somit sind die Deckelelemente der einzelnen Vorratsbehälter 3, 4, 5 der Vorratsbehältereinheit 1 zu einem einzigen Deckelelement 7 zusammengefasst. Die Einfüllöffnungen 6 der Vorratsbehälter 3, 4, 5sind durch Stege 2, auf deren Oberseite Dichtelemente 8 angeordnet sind, voneinander getrennt. Die einzelnen Einfüllöffnungen 6 der Vorratsbehälter 3, 4, 5 der Vorratsbehältereinheit 1 sind nebeneinander angeordnet, wie die Zeichnung zeigt. Die den einzelnen Einfüllöffnungen 6 zugeordneten Dichtelemente 8 wirken mit dem Deckelelement 7 zusammen. Wenn das Deckelelement 7 aus der in der Zeichnung dargestellten aufgeklappten Stellung in seine Schließstellung verbracht wird, schließt das Deckelelement 7 mit dem Dichtelementen 8 die einzelnen Vorratsbehälter 3, 4, 5 gegeneinander und gegenüber dem Äußeren abdichtend ab.

## Patentansprüche

1. Vorratsbehältereinheit einer pneumatischen landwirtschaftlichen Verteilmaschine mit mehreren Vorratsbehältern, wobei die einzelnen Vorratsbehälter Einfüllöffnungen aufweisen, wobei die Einfüllöffnungen durch Deckelelemente verschließbar sind, **dadurch gekennzeichnet, dass** die Deckelelemente mehrerer Vorratsbehälter (3,4,5) zu einem Deckelement (7) zusammengefasst sind, und dass den Einfüllöffnungen (6) mit dem Deckelelement (7) zusammenwirkende Dichtelemente (8) zugeordnet sind.

2. Vorratsbehältereinheit nach Anspruch 1, **dadurch gekennzeichnet, dass** die Deckelelemente aller Vorratsbehälter (3,4,5) der Vorratsbehältereinheit (1) zu einem Deckelelement (7) zusammengefasst sind.

3. Vorratsbehältereinheit nach einem oder mehreren der vorstehenden Ansprüche, **dadurch gekennzeichnet, dass** die einzelnen Einfüllöffnungen (6) der Vorratsbehältereinheit (1)nebeneinander angeordnet sind.

4. Vorratsbehältereinheit nach einem oder mehreren der vorstehenden Ansprüche, **dadurch gekennzeichnet, dass** die einzelnen Einfüllöffnungen (6) der Vorratsbehältereinheit (1) unmittelbar nebeneinander angeordnet sind, dass die Einfüllöffnungen (6) der Vorratsbehälter (3,4,5) durch Stege (2), auf deren Oberseite Dichtelemente (8) angeordnet sind, voneinander getrennt sind.

5. Vorratsbehältereinheit nach einem oder mehreren der vorstehenden Ansprüche, **dadurch gekennzeichnet, dass** den Vorratsbehältern (3,4,5) ein Druckfördersystem, bei dem die Vorratsbehälter (3,4,5) mit einem Luftdruck höher als der Atmosphärendruck beaufschlagt werden, zugeordnet ist.

## Claims

1. Hopper unit of a pneumatic agricultural distribution machine having a plurality of hoppers, wherein the individual hoppers have filling orifices, wherein the filling orifices are closable by cover elements, **characterized in that** the cover elements of a plurality of hoppers (3, 4, 5) are combined to form one cover element (7), and **in that** the filling orifices (6) are assigned sealing elements (8) that interact with the cover element (7).

2. Hopper unit according to Claim 1, **characterized in that** the cover elements of all of the hoppers (3, 4, 5) of the hopper unit (1) are combined to form one cover element (7).

3. Hopper unit according to one or more of the preceding claims, **characterized in that** the individual filling orifices (6) of the hopper unit (1) are arranged alongside one another.

4. Hopper unit according to one or more of the preceding claims, **characterized in that** the individual filling orifices (6) of the hopper unit (1) are arranged directly alongside one another, and **in that** the filling orifices (6) of the hoppers (3, 4, 5) are separated from one another by crosspieces (2), on the top side of which sealing elements (8) are arranged.

5. Hopper unit according to one or more of the preceding claims, **characterized in that** the hoppers (3, 4, 5) are assigned a pressure conveyor system, in which the hoppers (3, 4, 5) are subjected to an air pressure higher than atmospheric pressure.

## Revendications

1. Unité de réservoirs de stockage d'une machine distributrice agricole pneumatique comprenant plusieurs réservoirs de stockage, les réservoirs de stockage individuels comprenant des ouvertures de remplissage, les ouvertures de remplissage pouvant être fermées par des éléments de couvercle, **caractérisée en ce que** les éléments de couvercle de plusieurs réservoirs de stockage (3, 4, 5) sont réunis pour former un élément couvercle (7), et **en ce que** des éléments d'étanchéité (8) coopérant avec l'élément couvercle (7) sont associés aux ouvertures de remplissage (6).

2. Unité de réservoirs de stockage selon la revendication 1, **caractérisée en ce que** les éléments de couvercle de tous les réservoirs de stockage (3, 4, 5) de l'unité de réservoirs de stockage (1) sont réunis pour former un élément couvercle (7).

3. Unité de réservoirs de stockage selon l'une quelconque ou plusieurs des revendications précédentes, **caractérisée en ce que** les ouvertures de remplissage individuelles (6) de l'unité de réservoirs de stockage (1) sont disposées côte à côte.

4. Unité de réservoirs de stockage selon l'une quelconque ou plusieurs des revendications précédentes, **caractérisée en ce que** les ouvertures de remplissage individuelles (6) de l'unité de réservoirs de stockage (1) sont disposées immédiatement côte à côte, et **en ce que** les ouvertures de remplissage (6) des réservoirs de stockage (3, 4, 5) sont séparées les unes des autres par des nervures (2) sur le côté supérieur desquelles sont disposés des éléments d'étanchéité (8).

5. Unité de réservoirs de stockage selon l'une quelconque ou plusieurs des revendications précédentes, **caractérisée en ce qu'**un système d'alimentation sous pression est associé aux réservoirs de stockage (3, 4, 5), dans lequel système les réservoirs de stockage (3, 4, 5) sont sollicités par une pression d'air supérieure à la pression atmosphérique.
